## Europäisches Patentamt

## European Patent Office

## Office européen des brevets

(19)

(11) Veröffentlichungsnummer: **0 009 733**

**A1**

(12) ## EUROPÄISCHE PATENTANMELDUNG

(21) Anmeldenummer: **79103574.4**

(22) Anmeldetag: **21.09.79**

(51) Int. Cl.³: **C 05 F 11/00**

(30) Priorität: 09.10.78 DE 2843928

(43) Veröffentlichungstag der Anmeldung:
16.04.80 Patentblatt 80/8

(84) Benannte Vertragsstaaten:
AT BE CH FR GB IT LU NL SE

(71) Anmelder: Nockemann, Otto
Homertskamp 10
D-5270 Gummersbach 1(DE)

(71) Anmelder: Propfe, Herbert, Dr.
Altriperstrasse 50-62
D-6800 Mannheim 24(DE)

(72) Erfinder: Nockemann, Otto
Homertskamp 10
D-5270 Gummersbach 1(DE)

(74) Vertreter: Deufel, Paul et al,
Patentanwälte MÜLLER-BORé-DEUFEL
SCHÖN-HERTEL Siebertstrasse 4
D-8000 München 86(DE)

(54) **Bodenverbesserungsmittel und seine Verwendung.**

(57) Die Erfindung betrifft ein Bodenverbesserungsmittel auf der Basis eines organischen cellulosereichen Materials, insbesondere Getreidestroh, das durch Zerkleinern zu einer in den Boden leicht einbringbaren Form and Versetzen mit einer Stickstoffverbindung, welche den zu seiner mikrobiellen Zersetzung benötigten Stickstoff liefert, wobei vor der Verwendung die Feuchtigkeit so niedrig bzw. die Konzentration der Stickstoffverbindung so hoch gehalten erden, daß keine Zersetzung eintritt, hergestellt worden ist. Dieses Mittel ist leicht, gut verteilbar, ohne Schwierigkeiten in den Boden einzuarbeiten und besitzt eine gute Lockerungswirkung. Es besteht in der Hauptsache aus mikrobiell abbaubaren Substanzen, wobei die mikrobielle Zersetzung erst ab einem bestimmten relativ hohen Feuchtigkeitsgrad bzw. einer relativ niedrigen Konzentration der verwendeten Stickstoffverbindung beginnt. Die mikrobielle Zersetzung ist mit einer hohen Wärmeentwicklung verbunden, so daß das Mittel zusätzlich gut für Heizzwecke geeignet ist, beispielsweise in Treibhäusern.

EP 0 09 733 A1

MÜLLER-BORÉ · DEUFEL · SCHÖN · HERTEL

PATENTANWÄLTE

0009733

DR. WOLFGANG MÜLLER-BORÉ
(PATENTANWALT VON 1927-1975)
DR. PAUL DEUFEL, DIPL.-CHEM.
DR. ALFRED SCHÖN, DIPL.-CHEM.
WERNER HERTEL, DIPL.-PHYS.

ZUGELASSENE VERTRETER BEIM EUROPÄISCHEN PATENTAMT
REPRESENTATIVES BEFORE THE EUROPEAN PATENT OFFICE
MANDATAIRES AGRÉÉS PRÈS L'OFFICE EUROPÉEN DES BREVETS

P 2358 EU

## Bodenverbesserungsmittel und seine Verwendung

Mikrobielle Zersetzungen von organischen Materialien verlaufen in der ersten Phase oft unter erheblicher Wärmeabgabe. Deshalb können derartige Vorgänge dazu ausgenützt werden, Treibhauskulturen zu beheizen oder die Böden von Frühbeeten zu erwärmen. Das in Zersetzung befindliche organische Material kann nach erfolgter Nutzung der Abwärme dann zur mikrobiellen Belebung des Bodens eingesetzt werden, da die auf diese Weise gewonnenen Substrate mikrobiologisch sehr aktiv sind, was von entscheidender Bedeutung für die Bodenfruchtbarkeit ist.

Die Wiederverwertung organischer Materialien ist sowohl für die Erzeuger von organischen Abfällen, die oft in erheblichen Mengen anfallen, als auch für den Garten- und Landschaftsbau von Interesse, da in immer stärkerem Ausmaße

8 MÜNCHEN 86, SIEBERTSTR. 4 · POB 860720 · KABEL: MUEBOPAT · TEL. (089) 47 40 05 · TELECOPIER XEROX 400 · TELEX 5-24 285

0009733

hochwertige Bodenverbesserungsmittel als Ersatz für fehlenden Mutterboden und zur Aufbesserung niedrig qualitativer Substrate benötigt werden.

Die in Kleingärten praktizierte Kompostbereitung erfordert einen hohen Arbeitsaufwand und setzt eine beträchtliche Erfahrung voraus. Die Kompostbereitung aus pflanzlichen Abfällen läßt außerdem einen wichtigen Teil der biologischen Prozesse außerhalb des Bodens, z. B. in einer Miete oder einem Silo, ablaufen. Die landwirtschaftliche Forschung hat jedoch gerade in jüngster Zeit nachgewiesen, daß diese ersten intensiveren Umsetzungsvorgänge unter Einwirkung von Mikroorganismen einen sehr günstigen Einfluß auf die Gesunderhaltung und Fruchtbarkeit der Böden haben.

So wird von J. Debruck im AID-Heft 386 ausgeführt, daß eine erhöhte biologische Aktivität, mit ihren positiveren Auswirkungen auf die Struktur und die Nährstoffdynamik des Bodens, zu einer verbesserten Ertragsbildung führt. Diese ertragsfördernde Wirkung der biologischen Umsetzungsprozesse im Boden wird aber nur wirksam, wenn sie zumindest teilweise vor der Vegetationsperiode im Boden stattgefunden haben. Die Flächenkompostierung ist nur dann sinnvoll, wenn sie sich zwanglos in bestehende landwirtschaftliche Fruchtfolgen oder Bearbeitungsmaßnahmen einfügen läßt. Eine Hauptforderung ist daher, daß die mikrobiologischen Abbauvorgänge terminierbar sein müssen und sich in einem möglichst kurzen Zeitraum abspielen.

Den verschiedenen Wirtschaftsbereichen, die sich mit Garten- und Landschaftsbau befassen, stehen jedoch bisher nur Bodenverbesserungsmittel zur Verfügung, die lediglich eine Verbesserung der physikalischen Eigenschaften des Bodens bewirken, beispielsweise eine Verbesserung des Wasser- und Lufthaushaltes. Die jedoch dringend erwünschte Aktivierung des Bodenlebens können Produkte auf der Basis von Schaumstoffen, Braunkohle oder Torf nicht erbringen, weil es sich dabei um nahezu sterile und inerte Produkte mit nur einem geringen Teil an biologisch verwertbarer Substanz handelt.

Großtechnisch erzeugte Komposte aus kommunalen Abfällen, wie Müll und Klärschlamm, weisen neben der nicht kontrollierbaren Schwankung der Zusammensetzung und teilweise bedenklicher Inhaltsstoffe den gleichen Nachteil wie Gartenkomposte auf, die darin bestehen, daß die ersten wichtigen Umsetzungsvorgänge außerhalb des Bodens stattgefunden haben.

Nach den neuesten Erkenntnissen der Agrarforschung wäre es jedoch wichtig, die positive Wirkung der Umsetzungsprozesse im Boden auch anderen Bereichen der Landwirtschaft und des Gartenbaus, die sich mit intensiver Bodenbewirtschaftung befassen, wie beispielsweise den Hobby- und Kleingärtnern, denen kein bodenbelebendes Substrat mehr zur Verfügung steht, zugänglich zu machen.

Es besteht ein Bedarf an einem auf dem Markt erhältlichen, in seinen Eigenschaften standardisierten Produkt, dessen möglichst hoher Gehalt an mikrobiell verwertbarer Substanz erst unter festgelegten Bedingungen bei der Einarbeitung in den Boden zu schneller mikrobieller Zersetzung mit hoher Wärmeentwicklung gebracht werden kann. Dieses Produkt müßte über längere Zeit lagerungsfähig sein, ohne daß dabei

0009733

während dieser Zeit die positiven Eigenschaften verloren gehen, wie es teilweise bei handelsüblichen Komposten der Fall ist. Bisher konnten die vorstehend aufgeführten angestrebten Eigenschaften von keinem bekannten Produkt erfüllt werden.

Die Erfindung hat sich daher die Aufgabe gestellt, ein Bodenverbesserungsmittel auf der Basis eines organischen cellulosereichen Materials, insbesondere Getreidestroh, zu schaffen, durch das die Nachteile der bisher bekannten Materialien, wie sie vorstehend dargelegt wurden, beseitigt werden. Diese Aufgabe wird erfindungsgemäß gemäß den Ansprüchen gelöst.

Das erfindungsgemäße Bodenverbesserungsmittel ist leicht, gut verteilbar, ohne Schwierigkeiten in den Boden einzuarbeiten und besitzt eine gute Lockerungswirkung. Es besteht in der Hauptsache aus mikrobiell abbaubaren Substanzen, wobei die mikrobielle Zersetzung erst ab einem bestimmten relativ hohen Feuchtigkeitsgrad bzw. einer relativ niedrigen Konzentration der verwendeten Stickstoffverbindung beginnt. Feuchtigkeitsgrad bzw. Konzentration der Stickstoffverbindung bei welchen die mikrobielle Zersetzung initiiert wird, lassen sich leicht durch einfache Vorversuche ermitteln. Bei der Herstellung lassen sich diese Parameter so einstellen, daß das erfindungsgemäße Produkt über längere Zeiträume hinweg lagerungs- und versandfähig ist. Erst bei seiner Verwendung werden entweder der Feuchtigkeitsgehalt derartig erhöht oder die Konzentration der Stickstoffverbindung derartig erniedrigt, daß die mikrobielle Zersetzung initiiert wird, die mit einer hohen Wärmeentwicklung verbunden ist, so daß das erfindungsgemäße Material bei seiner mikrobiellen Zersetzung zusätzlich gut für Heizzwecke geeignet ist, beispielsweise in Treibhäusern oder Frühbeeten. Das Material läßt sich dabei in gleicher Weise wie beispielsweise Pferdemist einsetzen. Nachdem die Initiierung der mikrobiellen Zersetzung initiiert ist, läuft diese relativ schnell ab, insbesondere in einem pH-Bereich zwischen 5 und 8. Das Verhältnis Kohlenstoff:Stickstoff sollte in dem Material zwischen etwa 10 und 30 liegen. Bringt man nämlich mikrobiell zersetzbare stickstoffarme organische Substanzen, die nicht in den angegebenen Bereich fallen, in den Boden ein, so wird der zu ihrer Zersetzung benötigte Stickstoff dem Boden entnommen und im Körperprotein der Mikroben festgelegt. Er steht dann vorübergehend für die Pflanzenernährung nicht mehr zur Verfügung, was natürlich nachteilig ist. Erfindungsgemäß werden zur Stickstoffversorgung bevorzugt solche Stickstoffverbindungen eingesetzt, die in den erforderlichen Mengen nicht toxisch sind. Als Stickstoffverbindungen kommen erfindungsgemäß insbesondere solche Verbindungen infrage, die den pH-Wert des Bodenverbesserungsmittels nicht unter 5 senken und in der erforderlichen Konzentration in das Mittel eingebracht werden können. Erwähnt seien insbesondere Harnstoff, es kommen jedoch auch andere Verbindungen infrage, wie beispielsweise Diammoniumphosphat, Ammoniumsulfat oder Ammoniumnitrat.

Die Stickstoffverbindungen werden vorzugsweise in Form möglichst konzentrierter wäßriger Lösungen mit dem mikrobiell abbaubaren organischen cellulosereichen Material vermischt. Es ist ferner möglich, einen Teil des Wassers, in dem die Stickstoffverbindungen aufgelöst sind, durch flüssige oder sirupöse stickstoffhaltige Substanzen zu ersetzen, beispielsweise Melasse. Diese Ausführungsform ist dann besonders zweckmäßig, wenn Stickstoffverbindungen mit hohem Stickstoffgehalt benutzt werden, so daß die Gesamtmenge der eingebrachten chemischen Verbindungen relativ gering ist.

Das Vermischen des mikrobiologisch zersetzbaren organischen cellulosereichen Materials, wie insbesondere Getreidestroh, mit der stickstoffliefernden Verbindung sollte möglichst innig durchgeführt werden, damit die mikrobielle Zersetzung schnell erfolgt und der für die Zersetzung erforderliche Stickstoff nicht erst durch Austausch- und Transportvorgänge, unter Umständen auch aus dem Boden, herangeführt werden muß.

Aufgrund dieses Erfordernisses wäre die Lösung nahegelegen, das mikrobiologisch abbaubare Material mit einer möglichst verdünnten Lösung der stickstoffliefernden Substanz zu versetzen. Dabei wäre jedoch der für die Initiierung der Zersetzung erforderliche Feuchtigkeitsgrad sehr schnell erreicht, so daß eine Lagerung und Versendung des Materials nicht mehr möglich wäre, vielmehr müßte es sofort in den Boden eingebracht werden. Es war daher nicht naheliegend, zur Erzielung eines lagerungsfähigen Bodenverbesserungsmittels mit terminierbarer mikrobiologischer Zersetzung die für diese Zersetzung erforderliche stickstoffliefernde Verbindung in gleichmäßiger feinverteilter Form in das Material einzubringen, allerdings unter Vermeidung von zuviel Feuchtigkeit.

Erfindungsgemäß ist zur Herstellung des Bodenverbesserungsmittels zerkleinertes Getreidestroh besonders gut geeignet, weil seine Ligninstruktur eine große Elastizität selbst kleiner Teilchen von Halmwänden bewirkt, die im Boden dem Bodendruck entgegenwirkt und so eine gute Lockerung bedingt.

Getreidestroh weist jedoch einen sehr geringen Stickstoffgehalt auf. Aufgrund des Überwiegens von Kohlenstoff ergibt sich ein sehr hohes Verhältnis von Kohlenstoff zu Stickstoff von etwa 110. In Verbindung mit dem relativ hohen Ligningehalt von 16 bis 20 % resultiert daraus ein sehr träger mikrobieller Abbau von Stroh, so daß dem mikrobiellen Abbau fördernder Stickstoff in Form von Stickstoffverbindungen in der weiter oben beschriebenen Weise zugesetzt werden muß.

Die Erfindung wird anhand des folgenden Ausführungsbeispiels näher erläutert.

Getreidestroh wird mit einer bekannten Spezialmaschine für die Laugenbehandlung von Stroh zerkleinert, wobei statt der in üblicher Weise eingesetzten Natronlauge eine 22 %ige Lösung von Harnstoff in einer Menge von 10 1 sowie 2 kg Melasse/100 kg Stroh verwendet werden. Bei der erwähnten Spezialmaschine handelt es sich um eine Maschine, wie sie für die Laugenbehandlung von Getreidestroh entwickelt wird, durch die eine bessere Verdaulichkeit des Strohs für Wiederkäuer durch Anlösen der Ligninstruktur mittels Alkalilauge erzielt wird. In der derartigen Maschine wird die Lauge gleichmäßig über das zuvor zerrissene Stroh gesprüht und in die stark vergrößerte Strohoberfläche eingerieben. Da die Zerkleinerungsleistung einer derartigen Maschine manchmal nicht ausreichend ist, kann man auch auf Strohmühlen verschiedener Bauarten zurückgreifen, die das Stroh mit einstellbarer maximaler Teilchenlänge wesentlich feiner und gleichmäßiger zerteilen. Dabei sind jedoch nur solche Bauarten geeignet, bei denen Gebläse- und Förderflügel außerhalb des Siebes rotieren, damit eine Befeuchtung des Strohs mit der erfindungsgemäß eingesetzten Behandlungslösung möglich ist. Diese Lösung wird in bekannter Weise von einer Dosierpumpe synchron zum Stroheinzug in die Ansaugöffnung oder den Mahlraum der Strohmühle gesprüht. Während des Mahlvorgangs wird das Stroh somit gleichmäßig und intensiv mit der Behandlungslösung benetzt.

Das in der beschriebenen Weise behandelte Stroh kann in Säcke abgepackt und während längerer Zeitspannen gelagert werden. Zu seinem Einsatz genügt eine Zugabe von 8 - 10 l Wasser/100 kg Stroh, wodurch die mikrobielle Zersetzung initiiert wird, die dann unter erheblicher Wärmeentwicklung schnell abläuft.

Läßt man bei dem vorstehend beschriebenen Beispiel die Melasse weg, so ist der Feuchtigkeitsgehalt relativ zu der Konzentration an Harnstoff (der Feuchtigkeitsgehalt beträgt ca. 23 %) zu hoch, um das Initiieren der mikrobiellen Zersetzung zu verhindern. Daher ist dieses Produkt nicht zuverlässig lagerungsfähig. Stroh und Heu mit einem Feuchtigkeitsgehalt von 23 % sind generell nicht lagerungsfähig. Daher ist der Zusatz der Melasse notwendig, um die Konzentration der Stickstoffverbindungen auf einen Wert zu erhöhen, welcher die Initiierung einer mikrobiellen Zersetzung verhindert.

Die bei der vorstehend beschriebenen Ausführungsform in das Stroh eingebrachte Stickstoffmenge beträgt 1 kg/100 kg Stroh. Die gleiche Stickstoffmenge läßt sich in 100 kg Stroh in der Weise einbringen, daß man 5 kg Diammoniumphosphat in 10 l Wasser auflöst und die erhaltene Lösung innig in 100 kg Stroh einmengt. Dabei wird trotz des im Vergleich zu dem mit Harnstoff behandelten Strohs höheren Feuchtigkeitsgehaltes ein sicher lagerungsfähiges Produkt erhalten, dessen mikrobielle Zersetzung erst bei etwa 35 % Feuchtigkeit einsetzt.

Wie aus den vorstehenden Ausführungen ersichtlich ist, ist es nicht möglich, generelle Angaben über den Feuchtigkeitsgehalt des Strohs bzw. die Konzentration der stickstoffhaltigen Verbindung zur Vermeidung einer Initiierung der mikrobiellen Zersetzung bei der Aufbereitung des Strohs bzw. seiner Lagerung zu machen. Als Anhaltspunkt kann jedoch gelten, die stickstoffhaltige Verbindung in einer Menge von 1 bis 3 %, vorzugsweise 1,5 %, bezogen auf das fertige Produkt, zuzumischen. Die vorstehend erwähnten reinen Stickstoffverbindungen können teilweise durch andere vorzugsweise salzartige Verbindungen, welche die mikrobielle Zersetzung der erfindungsgemäßen Produkte während der Herstellung und Lagerung verhindern, ersetzt werden, beispielsweise durch Diammoniumphosphat und schwefelsaures Ammoniak.

Es ist erfindungsgemäß auch möglich, ein laugenbehandeltes Stroh mit einer sauer reagierenden Stickstofflösung so aufzubereiten, daß sowohl der Laugenrest neutralisiert als auch ca. 1 % Stickstoff, bezogen auf das Trockengewicht, eingebracht wird. Dabei ist die Salzkonzentration in dem Verfahrensprodukt für eine rasche mikrobielle Zersetzung zwar etwas hinderlich, als Bodenverbesserungsmittel ist dieses Material trotzdem geeignet, weil die chemische Überlastung der einzelnen Teilchen bei guter Verteilung in feuchtem Boden schnell ausgeglichen wird. Da dieses Material durch die Laugenbehandlung mit Kalilauge praktisch sterilisiert worden ist und die Unkrautsamen unschädlich gemacht worden sind, eignet es sich nach Beimpfen mit geeigneten Mikrokulturen für die biologische Aktivierung von Substraten im Gartenbau.

Erfindungsgemäß lassen sich als Ausgangsmaterialien auch andere einheitliche cellulosereiche organische Materialien verwenden, wie beispielsweise Altpapier oder Holzabfälle, wobei die erforderliche Menge an stickstoffhaltiger Verbindung entsprechend auszuwählen ist, was sich durch einfache Vorversuche ermitteln läßt.

Die während der mikrobiellen Zersetzung des erfindungsgemäßen Bodenverbesserungsmittels erzeugte Wärme kann insbesondere zum Beheizen von Treibhäusern und Frühkulturbeeten verwendet werden.

## Patentansprüche

1. Bodenverbesserungsmittel auf der Basis eines organischen cellulosereichen Materials, insbesondere Getreidestroh, dadurch gekennzeichnet, daß es durch Zerkleinern zu einer in den Boden leicht einbringbaren Form und Versetzen mit einer Stickstoffverbindung, welche den zu seiner mikrobiellen Zersetzung benötigten Stickstoff liefert, wobei vor der Verwendung die Feuchtigkeit so niedrig bzw. die Konzentration der Stickstoffverbindung so hoch gehalten werden, daß keine Zersetzung eintritt, hergestellt worden ist.

2. Bodenverbesserungsmittel nach Anspruch 1, dadurch gekennzeichnet, daß es in der Weise erhalten worden ist, daß die Stickstoffverbindung in Form einer konzentrierten wäßrigen Lösung zugesetzt wird.

3. Bodenverbesserungsmittel nach den Ansprüchen 1 bis 2, dadurch gekennzeichnet, daß es in der Weise hergestellt worden ist, daß ein Teil des Wassers der wäßrigen Lösung der Stickstoffverbindung durch flüssige oder sirupöse Substanzen, insbesondere Melasse, ersetzt wird.

4. Bodenverbesserungsmittel nach einem der Ansprüche 1 bis 3, dadurch gekennzeichnet, daß es in der Weise hergestellt worden ist, daß ein Verhältnis Kohlenstoff:Stickstoff von etwa 10 bis 30 eingehalten wird.

5. Bodenverbesserungsmittel nach Anspruch 1, dadurch gekennzeichnet, daß es in der Weise hergestellt worden ist, daß ein mit Lauge behandeltes organisches Material insbesondere Getreidestroh, mit einer sauer reagierenden Stickstoffverbindung versetzt wird.

6. Verwendung des Bodenverbesserungsmaterials gemäß den
Ansprüchen 1 bis 5 nach Zugabe einer seine mikrobielle
Zersetzung initiierenden Wassermenge zu Heizzwecken.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 1 022 753 (PROFFIT A SOULIS)  \* Seite 2, Zusammenfassung $1^{\circ}, 2^{\circ}$ a,b,$3^{\circ}$e \* | 1 |
| | -- | |
| | FR - A - 966 784 (BOUGAUD & CARBONA-BALAGUER)  \* Seite 1, Zusammenfassung $1^{\circ}$, a,b \* | 1 |
| | -- | |
| A | GB - A - 648 102 (DEW) | |
| A | FR - A - 772 106 (ZANGGER) | |
| | ---- | |

**KLASSIFIKATION DER ANMELDUNG (Int.Cl. 3)**

C 05 F 11/00

**RECHERCHIERTE SACHGEBIETE (Int. Cl. 3)**

C 05 F 11/00
       13/00
C 05 G 1/00
C 05 F 5/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14.01.1980 | STEELAN... |

EPA form 1503.1 06.78